# EUROPÄISCHE PATENTANMELDUNG

(11) **EP 4 825 635 A1**
(43) Veröffentlichungstag der Anmeldung: **21.10.2026**
(21) Anmeldenummer: 25171174.3
(22) Anmeldetag: 17.04.2025
(51) Int. Cl.: B60L 1/08, B60L 50/51, B60L 50/71, B60L 50/72, B60L 50/75, B60L 53/14, B60L 53/80, B60L 58/12, B60L 58/26, B60L 58/33, B60L 58/34, B60L 58/40, E02F 9/08, E02F 9/20, H01M 8/2475

(54) **ELEKTRISCH BETRIEBENE TIEFBAUMASCHINE UND VERFAHREN ZUM BETREIBEN EINER ELEKTRISCHEN TIEFBAUMASCHINE**

(71) Anmelder: BAUER Maschinen GmbH, 86529 Schrobenhausen (DE)
(72) Erfinder: Kerausch, Cornelia, 86551 Aichach (DE); Sauer, Daniel, 86551 Aichach (DE); Fahn, Felix, 86558 Hohenwart (DE)
(74) Vertreter: Wunderlich & Heim Patentanwälte PartG mbB

(57) **Zusammenfassung**

Die Erfindung betrifft eine elektrisch betriebene Tiefbaumaschine (10) mit einem mobilen Trägergerät (12), welches einen fahrbaren Unterwagen (14) und einen Oberwagen (16) aufweist, einem Tiefbauwerkzeug (8), mehreren Elektromotoren zum Betreiben von Komponenten der Tiefbaumaschine (10), mindestens einer aufladbaren Batterieeinheit, welche im Oberwagen (16) angeordnet ist und zum Speichern von elektrischer Energie und zum Versorgen der Elektromotoren mit elektrischer Energie ausgebildet ist, und einer Brennstoffzelleneinheit (70), die mindestens eine Brennstoffzelle und einen Wasserstoffvorrat umfasst, wobei die Brennstoffzelleneinheit (70) zum bedarfsweisen Erzeugen von elektrischer Energie ausgebildet ist, welche über einen Pufferbatteriespeicher abgebbar ist. Nach der Erfindung ist vorgesehen, dass die Brennstoffzelleneinheit (70) getrennt zu dem Pufferbatteriespeicher ausgebildet und angeordnet ist, dass die Brennstoffzelleneinheit (70) an einer Außenseite des Oberwagens (16) lösbar angebracht ist oder neben der Tiefbaumaschine (10) angeordnet ist und dass der Pufferbatteriespeicher für die Brennstoffzelle in dem Oberwagen (16) angeordnet ist, vorzugsweise zusammen mit der Batterieeinheit ausgebildet ist.

## Beschreibung

Die Erfindung betrifft eine elektrisch betriebene Tiefbaumaschine mit einem mobilen Trägergerät, welches einen fahrbaren Unterwagen und einen Oberwagen aufweist, einem Tiefbauwerkzeug, mehreren Elektromotoren zum Betreiben von Komponenten der Tiefbaumaschine, mindestens einer aufladbaren Batterieeinheit, welche im Oberwagen angeordnet ist und zum Speichern von elektrischer Energie und zum Versorgen der Elektromotoren mit elektrischer Energie ausgebildet ist, und einer Brennstoffzelleneinheit, die mindestens eine Brennstoffzelle und einen Wasserstoffvorrat umfasst, wobei die Brennstoffzelleneinheit zum bedarfsweisen Erzeugen von elektrischer Energie ausgebildet ist, welche über einen Pufferbatteriespeicher abgebbar ist, gemäß dem Oberbegriff des Anspruchs 1.

Die Erfindung betrifft weiterhin ein Verfahren zum Betreiben einer elektrischen Tiefbaumaschine gemäß dem Oberbegriff des Anspruches 13.

Rein elektrisch angetriebene Tiefbaumaschinen sind seit längerem bekannt und werden insbesondere an Arbeitsorten eingesetzt, an denen Lärm, Erschütterungen und Abgase unerwünscht sind, wie sie beispielsweise bei mit Verbrennungsmotor betriebenen Tiefbaumaschinen verstärkt auftreten können. Für einen energieautarken Betrieb weisen elektrisch angetriebene Tiefbaumaschinen zumeist eine wiederaufladbare Batterieeinheit auf, mit der elektrische Energie aus einer externen Energiequelle gespeichert werden kann. Um der Batterieeinheit elektrische Energie zuzuführen, wird die Tiefbaumaschine üblicherweise in einem Ladebetriebsmodus mit einem lokalen Stromnetz verbunden. Die so geladene Batterieeinheit ist anschließend in der Lage, bei einem Bewegen oder Verfahren, bei welchem häufig ein Trennen der elektrischen Leitungsverbindung erforderlich ist, die Tiefbaumaschine mit ausreichender elektrischer Energie zu versorgen.

Herkömmliche Batterieeinheiten sind in ihrer Speicherkapazität grundsätzlich begrenzt und können den elektrischen Betrieb der Tiefbaumaschine nur für eine bestimmte Zeit sicherstellen. Das kann dazu führen, dass die Tiefbaumaschine aufgrund der erforderlichen Ladepausen regelmäßig nicht einsatzbereit ist oder nur ein Betrieb mit angeschlossener Stromleitung möglich ist, was den Betrieb etwa beim Rangieren deutlich erschwert.

Um einen besonders langanhaltenden energieautarken elektrischen Betrieb von Tiefbaumaschinen sicherzustellen, ist es bekannt, Tiefbaumaschinen mit Brennstoffzellen elektrisch zu betreiben. In einer Brennstoffzelle wird aus gespeichertem Wasserstoff durch eine elektrochemische Reaktion elektrischer Strom erzeugt, welcher etwa zum Versorgen von Elektromotoren eingesetzt werden kann. Zum Ausgleich von Lastspitzen und einer gewissen Reaktionsträgheit der Brennstoffzelle bei kurzfristigem Leistungsbedarf sowie zum Betriebsstart der Brennstoffzelle ist für den Betrieb der Brennstoffzelle grundsätzlich stets ein elektrischer Batteriespeicher erforderlich, der die von der Brennstoffzelle mit konstanter Leistung erzeugte elektrische Energie speichern kann und der bei Bedarf in der Lage ist, ein hohes Maß an elektrischer Leistung in kurzer Zeit zur Verfügung zu stellen.

Aus der WO 2023/174685 A1 geht beispielsweise eine elektrisch betriebene Tiefbaumaschine hervor, die mit einer fest verbauten Brennstoffzelle betrieben werden kann. Dabei wird Wasserstoff mit der Brennstoffzelle durch eine elektrochemische Reaktion in elektrische Energie umgesetzt, welche sodann zum Betreiben von Elektromotoren genutzt wird. An der Tiefbaumaschine ist hierzu eine stationäre Speichereinheit ausgebildet, welche zum Speichern einer bestimmten Wasserstoffmenge vorgesehen ist, durch welche das Betreiben des Antriebs der Tiefbaumaschine in einem Fahrbetrieb oder in einem Baubetrieb ermöglicht wird. Für den Betrieb der Tiefbaumaschine ist dabei stets ein Mindestmaß an Wasserstoff in der verbauten Speichereinheit erforderlich.

Der Erfindung liegt die **Aufgabe** zugrunde, eine elektrisch betriebene Tiefbaumaschine und ein Verfahren zum Betreiben hierfür anzugeben, mit welchen ein besonders flexibler und effizienter Betrieb der Tiefbaumaschine ermöglicht wird.

Die Aufgabe wird zum einen durch eine elektrisch betriebene Tiefbaumaschine mit den Merkmalen des Anspruchs 1 und zum anderen durch ein Verfahren mit den Merkmalen des Anspruchs 13 gelöst. Bevorzugte Ausführungsformen der Erfindung sind in den jeweiligen abhängigen Ansprüchen angegeben.

Die erfindungsgemäße elektrisch betriebene Tiefbaumaschine ist dadurch gekennzeichnet, dass die Brennstoffzelleneinheit getrennt zu dem Pufferbatteriespeicher ausgebildet und angeordnet ist, dass die Brennstoffzelleneinheit an einer Außenseite des Oberwagens lösbar angebracht ist oder neben der Tiefbaumaschine angeordnet ist und dass der Pufferbatteriespeicher für die Brennstoffzelle in dem Oberwagen angeordnet ist, vorzugsweise zusammen mit der Batterieeinheit ausgebildet ist.

Eine Grundidee der Erfindung liegt darin, dass die Brennstoffzelleneinheit baulich getrennt zu dem für den Betrieb der Brennstoffzelle notwendigen Pufferbatteriespeicher angeordnet wird. Dies wird erreicht, indem der Pufferbatteriespeicher fest in der Tiefbaumaschine, insbesondere im Oberwagen, verbaut wird. Es kann damit also auf einen eigenen Pufferbatteriespeicher in der Brennstoffzelleneinheit verzichtet werden.

Durch die in der Brennstoffzelleneinheit installierte Brennstoffzelle wird der Pufferbatteriespeicher mit konstanter Leistung geladen. Je nach Anwendungs- und Leistungsbedarf kann der Pufferbatteriespeicher dann elektrische Energie an die Tiefbaumaschine abgeben, insbesondere auch über die Ladeleistung der Brennstoffzelleneinheit hinaus. Durch den Verzicht auf einen Batteriespeicher als Teil der Brennstoffzelleneinheit kann das Gewicht der Brennstoffzelleneinheit reduziert und die Bauform kompakter und auch kostengünstiger gestaltet werden. Dies ermöglicht einen besonders flexiblen und vielfältigen Einsatz der Brennstoffzelleneinheit an Tiefbaumaschinen.

Ein anderer Aspekt der Erfindung besteht darin, dass für den Pufferbatteriespeicher auf einen oder mehrere in der elektrischen Tiefbaumaschine bereits bestehenden Batteriespeicher zurückgegriffen wird und so vorzugsweise eine Einheit gebildet wird. Der Pufferbatteriespeicher und die aufladbare Batterieeinheit können also insbesondere zusammen als eine Batterieeinheit ausgebildet sein. Diese Batterieeinheit übernimmt bei einem Anbau der Brennstoffzelleneinheit also zusätzlich die Funktion des Pufferbatteriespeichers. Grundsätzlich ist mindestens ein Batteriespeicher zur autarken Energieversorgung der Tiefbaumaschine in einem rein batterieelektrischen Betrieb erforderlich. Durch das Zusammenfassen des hierzu vorgesehenen Batteriespeichers mit dem Pufferbatteriespeicher kann auf eine zusätzliche Batteriespeichereinheit für die Brennstoffzelle verzichtet werden. Auf diese Weise wird das Gesamtgewicht der Tiefbaumaschine und der Brennstoffzelleneinheit vermindert und die Energieeffizienz gesteigert. Zudem können Kosten eingespart werden.

Ein weiterer Aspekt der Erfindung liegt darin, dass die Brennstoffzelleneinheit nicht fest an der Tiefbaumaschine verbaut wird, sondern von außen lösbar an der Tiefbaumaschine angebracht wird. Auf diese Weise kann die Brennstoffzelleneinheit an der Tiefbaumaschine flexibel installiert und eingesetzt werden. Es kann etwa bei besonders energie- oder leistungsintensiven Anwendungen der Tiefbaumaschine zusätzlich elektrische Energie direkt an der Tiefbaumaschine aus Wasserstoff erzeugt werden, ohne dass hierbei eine Kabelverbindung der Tiefbaumaschine zu einer lokalen Stromversorgung auf der Baustelle notwendig ist. Gleichfalls kann so die Brennstoffzelleneinheit bei anderweitigem Bedarf flexibel von der Tiefbaumaschine entfernt werden. Die Tiefbaumaschine kann also sowohl rein batterieelektrisch als auch mit einer zusätzlichen Brennstoffzelleneinheit zur Verlängerung der Betriebsdauer betrieben werden. In beiden Fällen ist grundsätzlich auch ein kabelgebundener Betrieb der Tiefbaumaschine möglich.

Eine bevorzugte Ausführungsform der Erfindung besteht darin, dass ein Zwischenkreis ausgebildet ist, durch welchen die Elektromotoren, die mindestens eine Batterieeinheit und die Brennstoffzelleneinheit miteinander zum Verteilen von elektrischer Energie leitungsverbunden sind. Auf diese Weise kann die elektrische Energie besonders effizient zwischen den Elektromotoren, der Batterieeinheit und der Brennstoffzelleneinheit verteilt werden. Der Zwischenkreis kann insbesondere zum Zuleiten von mit der Brennstoffzelleneinheit erzeugter elektrischer Energie an die Batterieeinheit ausgebildet sein. Vorteilhaft ist es, wenn die in der Batterieeinheit gespeicherte elektrische Energie bedarfsweise mit dem Zwischenkreis an die Elektromotoren abgegeben werden kann, um die Tiefbaumaschine elektrisch zu betreiben. Insbesondere kann die von der Brennstoffzelleneinheit mit konstanter Leistung erzeugte elektrische Energie an die Batterieeinheit und/oder bei Bedarf auch an die Elektromotoren abgegeben werden. Hierdurch lassen sich abhängig vom Betriebszustand der Tiefbaumaschine, dem Ladezustand der Batterieeinheit und der Brennstoffzelleneinheit verschiedene Betriebsmodi mit dem Zwischenkreis realisieren.

Die Steuerung der Energieverteilung im Zwischenkreis kann grundsätzlich vielfältig ausgebildet sein. Besonders zweckdienlich ist es nach einer Weiterbildung der Erfindung, dass eine erste Steuereinrichtung vorgesehen ist, die ausgebildet ist, die elektrische Energie im Zwischenkreis abhängig vom Ladezustand der Batterieeinheit zu verteilen. Zu der ersten Steuereinrichtung ist eine zweite Steuereinrichtung vorgesehen, die mit der ersten Steuereinrichtung in Verbindung steht und ausgebildet ist, abhängig von Steuerbefehlen der ersten Steuereinrichtung die von der Brennstoffzelleneinheit erzeugte elektrische Leistung anzupassen. Besonders vorteilhaft ist es dabei, wenn die erste Steuereinrichtung und die zweite Steuereinrichtung für einen Master-Slave-Betrieb ausgebildet sind, wobei zwischen der ersten Steuereinrichtung und der zweiten Steuereinrichtung eine Datenverbindung zur Übertragung der Steuerbefehle besteht. Die erste Steuereinrichtung kann insbesondere mit einer Maschinensteuerung der Tiefbaumaschine in Verbindung stehen und so etwa abhängig von Steuerbefehlen der Maschinensteuerung der Tiefbaumaschine oder auch eines Maschinenbedieners die elektrische Energie im Zwischenkreis verteilen. Auf diese Weise kann die Energieverteilung im Zwischenkreis flexibel auf den Leistungsbedarf der elektrisch betriebenen Tiefbaumaschine angepasst werden.

Zur Steuerung der Energieverteilung im Zwischenkreis ist es besonders zweckdienlich, dass die erste Steuereinrichtung zusätzlich mit den Elektromotoren und der mindestens einen Batterieeinheit in Datenverbindung steht. Ebenso ist es vorteilhaft, wenn die zweite Steuereinrichtung, welche insbesondere als Brennstoffzellensteuerung ausgebildet sein kann, mit der Brennstoffzelleneinheit in Datenverbindung steht. Hiermit kann eine besonders effiziente und schnelle Steuerung der Leistungsverteilung im Zwischenkreis erreicht werden.

Besonders zweckmäßig ist es nach einer Ausführungsvariante der Erfindung, dass mit dem Zwischenkreis zusätzlich mindestens eine elektrische Verbrauchseinheit verbunden ist. Als Verbrauchseinheit kann insbesondere eine Heiz- und/oder Kühleinrichtung, etwa zum Kühlen der mindestens einen Batterieeinheit, vorgesehen sein. Vorteilhaft ist es, dass die mindestens eine elektrische Verbrauchseinheit mittels einer Wandlereinheit, etwa einem DC/DC-Wandler, mit dem Zwischenkreis elektrisch verbunden ist. Durch den Anschluss der Verbrauchseinheit an den Zwischenkreis kann dessen Energieversorgung besonders einfach sichergestellt werden.

Weiterhin ist es bevorzugt, dass an der elektrisch betriebenen Tiefbaumaschine eine Zuführeinrichtung ausgebildet ist, wobei die Zuführeinrichtung zum lösbaren elektrischen Verbinden der Brennstoffzelleneinheit mit dem Zwischenkreis vorgesehen ist, so dass elektrische Energie von der Brennstoffzelleneinheit dem Zwischenkreis zuführbar ist. Die Zuführeinrichtung kann insbesondere als Steckverbindung zum Übertragen von elektrischer Leistung und zum Herstellen einer Datenverbindung ausgebildet sein. Besonders bevorzugt ist es, dass die Zuführeinrichtung an einer Außenseite der Tiefbaumaschine im Bereich der Brennstoffzelleneinheit angeordnet ist. So kann bei zusätzlichem Energiebedarf die Brennstoffzelleneinheit in besonders einfacher Weise mit der Energieversorgung der Tiefbaumaschine verbunden werden. Insgesamt wird also eine besonders flexible Anschlussmöglichkeit der Brennstoffzelleneinheit an die elektrisch betriebene Tiefbaumaschine ermöglicht.

Besonders vorteilhaft ist es nach einer Ausführungsform der Erfindung, dass zu der Brennstoffzelleneinheit ein DC/DC-Wandler zum Anschluss an den Zwischenkreis vorgesehen ist. So kann die Spannungslage der von der Brennstoffzelleneinheit erzeugten elektrischen Energie an den Zwischenkreis angepasst werden. Hierdurch kann die Brennstoffzelleneinheit besonders effizient mit dem Zwischenkreis verbunden werden.

Nach einer besonders bevorzugten Ausführungsvariante der Erfindung ist vorgesehen, dass die Brennstoffzelleneinheit einen eigenen separaten Zwischenkreis umfasst. Hierdurch kann elektrische Energie in der Brennstoffzelleneinheit besonders einfach und effizient übertragen werden. Der Zwischenkreis, der insbesondere auch als Brennstoffzellenzwischenkreis bezeichnet werden kann, kann vorzugsweise zum Leiten von Gleichstrom ausgebildet sein. Mit dem Zwischenkreis der Brennstoffzelleneinheit können insbesondere zwei oder mehr Brennstoffzellen, insbesondere Brennstoffzellenstacks, elektrisch verbunden sein. So kann besonders viel elektrische Energie für den Betrieb der Tiefbaumaschine erzeugt werden.

Nach einer Weiterbildung der Erfindung ist es vorteilhaft, dass der Zwischenkreis zum Leiten und Verteilen von Gleichstrom ausgebildet ist. Durch die Verwendung von Gleichstrom im Zwischenkreis kann allgemein die elektrische Energie besonders effizient übertragen werden. Besonders vorteilhaft ist es, wenn der Zwischenkreis zum Führen einer bestimmten Spannungslage, insbesondere zwischen 400 Volt und 800 Volt ausgebildet ist. Auf diese Weise kann etwa die mindestens eine Batterieeinheit besonders einfach mit dem Zwischenkreis verbunden werden.

Eine weitere vorteilhafte Ausgestaltung der Erfindung besteht darin, dass zum Kühlen der Brennstoffzelleneinheit eine Kühleinrichtung vorgesehen ist. Die Kühleinrichtung kann insbesondere zum Abführen von mit der Brennstoffzelleneinheit erzeugten Wärme an die Umgebung, etwa mit Ventilatoren, ausgebildet sein. Hierdurch kann die bei der Stromerzeugung generierte Abwärme besonders effizient an die Umgebung abgeführt werden. Die Kühleinrichtung kann derart ausgestaltet sein, dass durch die Kühlung mit der Kühleinrichtung eine gewisse Maximaltemperatur der Brennstoffzelle nicht überschritten wird. Die Kühleinrichtung kann insbesondere auch zum Zuführen von Wärme an die Brennstoffzelle ausgebildet sein. Auf diese Weise kann ein besonders sicherer und effizienter Betrieb der Brennstoffzelle ermöglicht werden und zudem die Langlebigkeit der Brennstoffzelle verbessert werden.

Nach einer Weiterbildung der Erfindung ist vorgesehen, dass eine Kühl- und/oder Heizeinrichtung an der elektrischen Tiefbaumaschine vorgesehen ist, die mit der Kühleinrichtung der Brennstoffzelleneinheit verbunden ist und so ein Wärmeaustausch möglich ist. Beispielsweise kann die Kühleinrichtung der Brennstoffzelle mit einer Kabinenklimaanlage der Tiefbaumaschine zum Beheizen des Innenraumes in Verbindung stehen. Mit anderen Worten kann der Kühlkreislauf der Brennstoffzelleneinheit mit einem Heizkreislauf der elektrisch betriebenen Tiefbaumaschine verbunden sein. Auf diese Weise kann die Abwärme der Brennstoffzelleneinheit besonders vorteilhaft genutzt werden.

Allgemein können die Elektromotoren der elektrischen Tiefbaumaschine beliebig ausgestaltet sein. Besonders vorteilhaft ist es jedoch, dass den Elektromotoren jeweils eine Invertereinheit zugeordnet ist, welche zur Umsetzung von Gleichstrom in Wechselstrom ausgebildet ist. Durch die Verwendung einer Invertereinheit können die Elektromotoren effizient mit dem Zwischenkreis verbunden werden. Die Invertereinheit kann insbesondere zur bidirektionalen Energieübertragung ausgebildet sein, so dass in einem Antriebsmodus elektrische Energie dem Elektromotor zugeführt wird und in einem Rekuperationsmodus elektrische Energie von dem Elektromotor abgeführt wird. Auf diese Weise kann die batterieelektrische Betriebsdauer der elektrischen Tiefbaumaschine verlängert werden.

In einer besonders bevorzugten Ausführungsform der Erfindung ist vorgesehen, dass die Brennstoffzelleneinheit als separates Brennstoffzellenmodul ausgebildet ist und dass an der Tiefbaumaschine eine Halteeinrichtung und/oder eine Befestigungseinrichtung vorgesehen ist, mit der die Brennstoffzelleneinheit lösbar und wechselbar an der Tiefbaumaschine befestigt ist. Auf diese Weise kann die Brennstoffzelleneinheit flexibel zur Verlängerung der Betriebsdauer an unterschiedlichen batteriebetriebenen Tiefbaumaschinen eingesetzt werden. Das Brennstoffzellenmodul kann insbesondere einen Container mit einem Metallgehäuse umfassen. Durch das Ausbilden einer Halte- und/oder Befestigungseinrichtung kann die Brennstoffzelleneinheit besonders einfach als zusätzlicher Energieversorger nachgerüstet werden. Insbesondere kann so in Situationen, in denen die Speicherkapazität der mindestens einen Batterieeinheit nicht ausreicht und ein kabelgebundener Betrieb nicht möglich ist, der Maschinenbetrieb aufrecht erhalten werden.

Für eine besonders einfache Installation des Brennstoffzellenmoduls an der Tiefbaumaschine kann die Halte- und/oder Befestigungseinrichtung vorzugsweise an einer Rückseite der Tiefbaumaschine ausgebildet sein. Denkbar ist es aber auch, dass die Halte- und/oder Befestigungseinrichtung anderweitig am Oberwagen der elektrischen Tiefbaumaschine ausgebildet ist. Je nach Art und Ausgestaltung der elektrisch betriebenen Tiefbaumaschine ergeben sich so unterschiedliche Befestigungsmöglichkeiten der Brennstoffzelleneinheit an der Tiefbaumaschine.

Nach einer Weiterbildung der Erfindung ist vorgesehen, dass die elektrisch betriebene Tiefbaumaschine als ein Bohrgerät ausgebildet ist und dass mindestens ein Elektromotor einen Kraftdrehkopf, eine Seilwinde und/oder eine Pumpe antreibt. Vorteilhaft ist es dabei, wenn mindestens ein Elektromotor in einem Rekuperationsmodus zum Rückgewinnen von elektrischer Energie an der Tiefbaumaschine ausgebildet ist. Hierdurch können die energieautarke Betriebsdauer der Tiefbaumaschine verlängert und die Effizienz verbessert werden.

Grundsätzlich kann die elektrisch betriebene Tiefbaumaschine beliebig mit elektrischer Energie versorgt werden. So kann die Tiefbaumaschine etwa an stationär auf der Baustelle ausgebildeten modularen Energiepacks geladen werden. Diese Energiepacks können ihrerseits Batterieeinheiten oder Brennstoffzellen umfassen, um so verschiedene Baumaschinen direkt auf der Baustelle ohne weite Wege zu laden. Ebenso kann die Batterieeinheit der elektrisch betriebenen Tiefbaumaschine wechselbar ausgebildet sein, um den Austausch mit einem geladenen Ersatzgerät zu ermöglichen. Eine besonders vorteilhafte Ausgestaltung zur Energieversorgung der erfindungsgemäßen Tiefbaumaschine besteht darin, dass eine Zuführeinrichtung an der Tiefbaumaschine zum Zuführen von elektrischer Energie aus einer separaten Wechselstromquelle ausgebildet ist, wobei zu der Zuführeinrichtung eine Stromgleichrichtereinheit vorgesehen ist. So kann die Tiefbaumaschine besonders einfach zum Laden der Batterieeinheit mit einem lokalen Stromnetz verbunden werden.

Die Zuführeinrichtung kann insbesondere als Steckverbindung zum Anschluss eines Stromkabels an die Tiefbaumaschine ausgebildet sein. Mit der Zuführeinrichtung wird so in vorteilhafter Weise auch ein kabelgebundener Betrieb der Tiefbaumaschine ermöglicht, was besonders bei energieintensiven Anwendungen von Vorteil ist.

Das erfindungsgemäße Verfahren ist dadurch gekennzeichnet, dass eine Tiefbaumaschine nach der Erfindung verwendet wird. Dabei können die zuvor beschriebenen Vorteile erzielt werden.

Eine besonders zweckmäßige Weiterbildung des Verfahrens besteht darin, dass an einer Baustelle mindestens zwei elektrisch betriebene Tiefbaumaschinen vorgesehen sind und dass die Brennstoffzelleneinheit abhängig vom Leistungs- und/oder Energiebedarf der Tiefbaumaschinen zwischen den Tiefbaumaschinen gewechselt wird. Unter Leistungs- und/oder Energiebedarf kann insbesondere auch der Ladezustand der aufladbaren Batterieeinheit verstanden werden. Hierdurch kann flexibel auf die jeweiligen Arbeitsumstände reagiert werden. Dabei können verschiedene Brennstoffzelleneinheiten mit unterschiedlichen Leistungsvermögen jeweils gezielt für bestimmte Arbeiten eingesetzt werden, die sich etwa hinsichtlich Arbeitsdauer und Leistungsintensität unterscheiden. Zweckdienlich ist es ebenso, wenn eine einzige Brennstoffzelleneinheit dauerhaft an der Baustelle verbleibt und bedarfsabhängig zwischen mehreren elektrischen Tiefbaumaschinen gewechselt wird. Auf diese Weise kann der Baubetrieb effizienter gestaltet und Kosten eingespart werden.

Eine weitere bevorzugte Verfahrensvariante besteht darin, dass die Batterieeinheit während des Betriebs der Tiefbaumaschine und/oder während des Stillstandes der Tiefbaumaschine mit der Brennstoffzelleneinheit geladen wird. So wird sichergestellt, dass die Batterieeinheit dauerhaft und unabhängig vom Betriebszustand der Tiefbaumaschine geladen wird. Insbesondere kann die elektrische Tiefbaumaschine während längerer Stillstandzeiten mit der Brennstoffzelleneinheit ohne zusätzliche Stromverbindung geladen werden.

Die Erfindung wird nachfolgend anhand von bevorzugten Ausführungsbeispielen näher erläutert, welche schematisch in den Zeichnungen dargestellt sind. In den Zeichnungen zeigen:
- Fig. 1: eine perspektivische Gesamtansicht einer erfindungsgemäßen Tiefbaumaschine;
- Fig. 2: eine weitere perspektivische Gesamtansicht der erfindungsgemäßen Tiefbaumaschine;
- Fig. 3: eine erste perspektivische Teilansicht der erfindungsgemäßen Tiefbaumaschine;
- Fig. 4: eine zweite perspektivische Teilansicht der erfindungsgemäßen Tiefbaumaschine;
- Fig. 5: eine schematische Schaltungsanordnung einer erfindungsgemäßen Tiefbaumaschine.

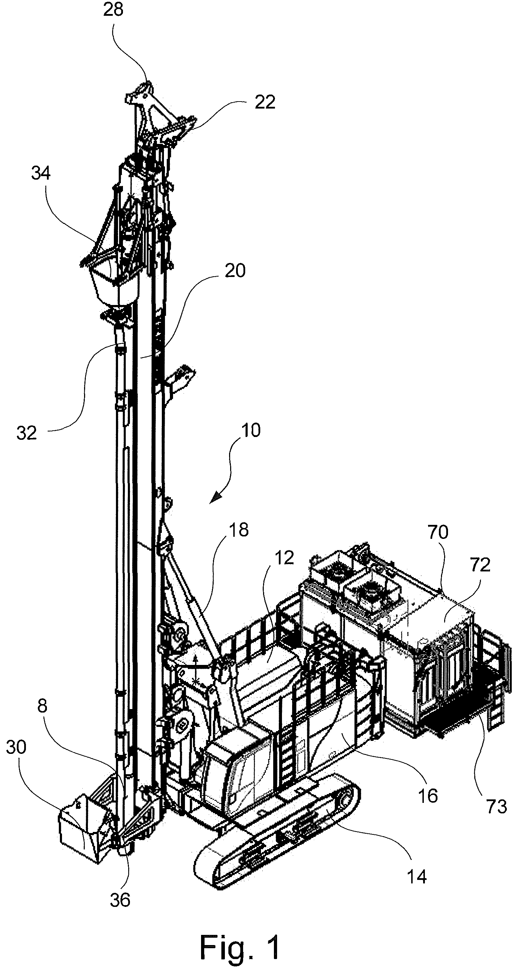

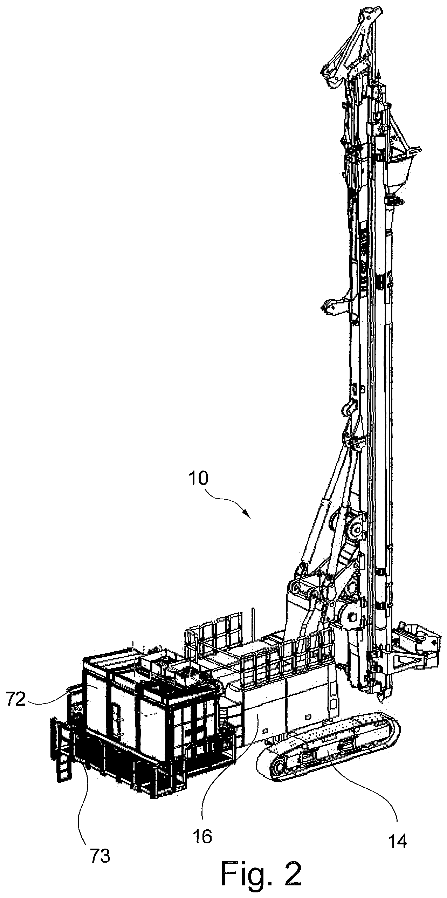

In den Fig. 1 und 2 ist ein Ausführungsbeispiel einer erfindungsgemäßen Tiefbaumaschine 10 mit einer Brennstoffzelleneinheit 70 und einem Trägergerät 12 aus zwei verschiedenen Blickrichtungen dargestellt. Das Trägergerät 12 kann vorzugsweise ein Raupenfahrwerk als Unterwagen 14 umfassen, auf welchem ein Oberwagen 16, insbesondere drehbar, gelagert sein kann. In einer Bedienkabine des Oberwagens 16 kann sich eine Steuerung, insbesondere eine erste Steuereinrichtung 100 befinden.

Über einen Anlenkmechanismus 18 kann an dem Oberwagen 16 vorzugsweise verstellbar ein Mast 20 gelagert sein, wobei an dem Mast 20 ein hier nicht gezeigtes Seil an Rollen 28 geführt werden kann. Der Mast 20 kann an seiner Oberseite einen Mastkopf 22 umfassen und weist im Betrieb eine im Wesentlichen vertikale Position auf. Der Mast 20 kann dabei insbesondere über einen oder mehrere Stellzylinder sowie feste Lenker direkt mit dem Oberwagen 16 verbunden sein. An der Stelle des Mastes 20 kann alternativ grundsätzlich auch ein verstellbarer Ausleger vorgesehen sein.

Die Tiefbaumaschine 10 kann grundsätzlich beliebig ausgebildet sein und unterschiedliche, insbesondere längliche, Bodenbearbeitungswerkzeuge, etwa sogenannte Bohrschnecken, Bohreimer, Bodenmischwerkzeuge, Rammgeräte, Schlitzwandfräsen oder Schlitzwandgreifer umfassen. In dem dargestellten Ausführungsbeispiel ist die Tiefbaumaschine 10 beispielhaft als ein Rüttelgerät mit einer Beschickungseinrichtung 30, einem Einbringrohr 32, einem Aufnahmebunker 34 und einem Rüttelantrieb 36 im Einbringrohr 32 ausgebildet, um eine Rüttelstopfsäule im Boden zu bilden.

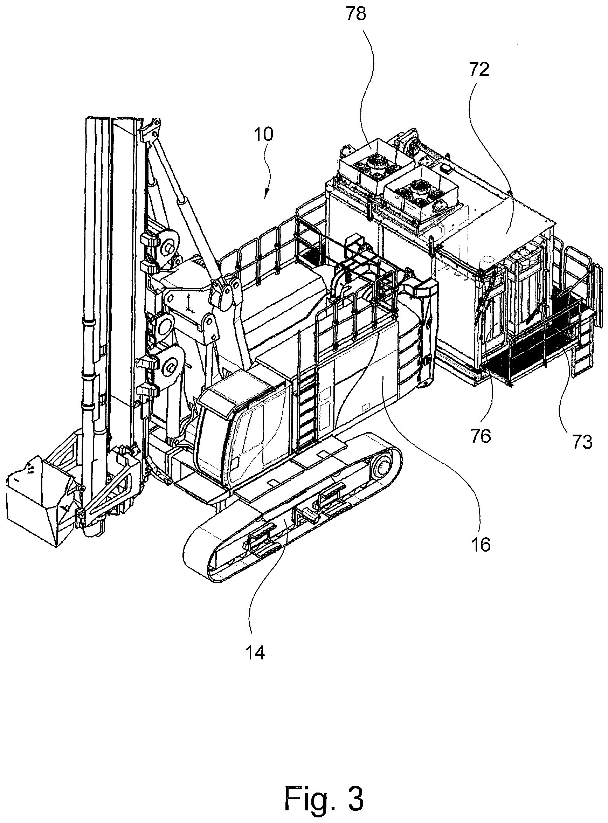

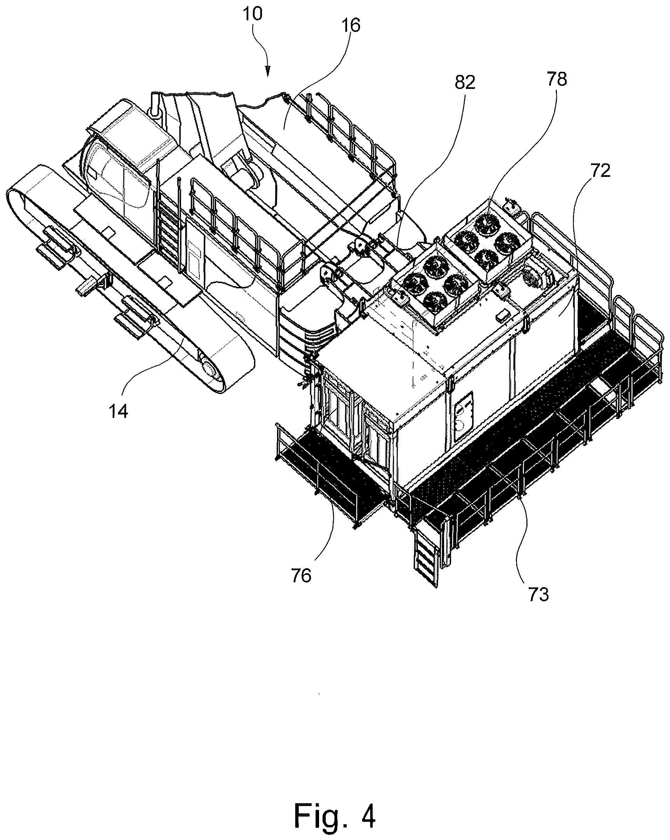

Die Figuren 3 und 4 zeigen jeweils einen vergrößerten Ausschnitt der erfindungsgemäßen Tiefbaumaschine 10 nach den Figuren 1 und 2 mit der Brennstoffzelleneinheit 70 aus verschiedenen Perspektiven. Wie zu erkennen, kann die Brennstoffzelleneinheit 70 als Brennstoffzellenmodul 72 in einem hinteren Bereich der Tiefbaumaschine 10 ausgebildet sein, wobei die Brennstoffzelleneinheit 70 als Teil des Brennstoffzellenmoduls 72 ausgebildet sein kann. Das Brennstoffzellenmodul 72 kann eine Begehung 73 mit Gerüst aufweisen, welches das Brennstoffzellenmodul 72 umfasst. Zur Kühlung der Brennstoffzelle 74 innerhalb des Brennstoffzellenmoduls 72 ist an einer Oberseite des Brennstoffzellenmoduls 72 eine Kühleinrichtung 78 ausgebildet. Die Kühleinrichtung 78 kann vorzugsweise zum einen aus einem Kühlflüssigkeitskreislauf, welcher die Wärme von der Brennstoffzelle wegführt, und zum anderen aus Wärmetauschern, in denen die Kühlflüssigkeit durch einen Luftstrom, etwa mit Ventilatoren, gekühlt wird, bestehen.

Wie etwa in Fig. 4 dargestellt ist, ist das Brennstoffzellenmodul 72 über eine Befestigungseinrichtung 82 mit dem Oberwagen 16 der Tiefbaumaschine 10 verbunden. Die Befestigungseinrichtung 82 kann dabei insbesondere an einer Rückseite der Tiefbaumaschine 10 befestigt sein.

Das Brennstoffzellenmodul 72, welches die Brennstoffzelleneinheit 70 umfasst, kann vorzugsweise einen Wasserstoffvorrat 76 aufweisen, der insbesondere als Tank, hier in Form von Gasflaschenbündeln, zum Speichern von Wasserstoff ausgebildet sein kann. Wie etwa in Fig. 3 zu erkennen ist, kann der Wasserstoffvorrat 76 insbesondere in einem Seitenbereich des Brennstoffzellenmoduls 72 vorgesehen sein. Um einen möglichst guten Schutz des Brennstoffzellenmoduls 72 zu gewährleisten, kann das Brennstoffzellenmodul 72 mit Brennstoffzelle 74 und Wasserstoffvorrat 76 zumindest teilweise von einem Gehäuse umgeben sein.

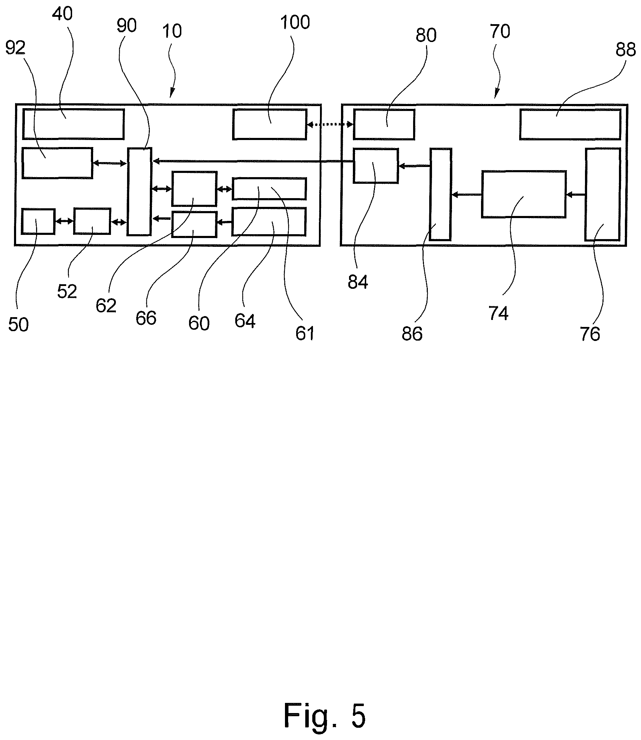

Fig. 5 zeigt eine schematische Schaltungsdarstellung der Tiefbaumaschine 10 sowie der Brennstoffzelleneinheit 70. Wie in Fig. 5 dargestellt, kann die Tiefbaumaschine 10 einen Zwischenkreis 90 umfassen, der eine Batterieeinheit 60, mehrere Elektromotoren 50 und weitere Verbrauchseinheiten 92 leitungsverbindet. Kommunikationsleitungen sind in Fig. 5 als gepunktete Pfeile dargestellt und Energieleitungen sind durch durchgängige Pfeile gekennzeichnet. Die Richtung des Energie-/Datenflusses bestimmt sich dabei rein beispielhaft mit der Pfeilrichtung. Die dargestellte Batterieeinheit 60 kann - wie in Fig. 5 gezeigt - vorzugsweise als Pufferbatteriespeicher 61 ausgebildet sein, wobei die von der Brennstoffzelle 74 erzeugte elektrische Energie in der Batterieeinheit 60 zwischengespeichert werden kann. Das heißt, dass die Batterieeinheit 60 der Tiefbaumaschine 10 die Funktion des Pufferbatteriespeichers 61 für die Brennstoffzelle 74 übernehmen kann. Alternativ zu der Energiezwischenspeicherung kann die von der Brennstoffzelleneinheit 70 erzeugte elektrische Energie über den Zwischenkreis 90 grundsätzlich auch direkt an die Elektromotoren 50 oder die Verbrauchseinheiten 92 abgegeben werden.

In Fig. 5 sind ferner mehrere Elektromotoren 50 mit zugehörigen Invertereinheiten 52 schematisch dargestellt. Der Zwischenkreis 90 kann insbesondere als Gleichstromzwischenkreis ausgebildet sein. Der Zwischenkreis 90 kann insbesondere vorgesehen sein, elektrische Energie von der Brennstoffzelleneinheit 70 zu empfangen. Die Brennstoffzelleneinheit 70 kann vorzugsweise eine Brennstoffzelle 74 mit einem Wasserstoffvorrat 76 umfassen, wobei der Wasserstoffvorrat 76 als Wasserstoffspeicher, insbesondere als Wasserstoffgasflaschenbündel oder als Wasserstofftank, ausgebildet sein kann. Die mit der Brennstoffzelleneinheit 70 erzeugte elektrische Energie kann vorzugsweise über einen optionalen separaten Zwischenkreis 86 der Brennstoffzelleneinheit 70 an einen optionalen DC/DC-Wandler 84 geleitet werden und von dort dem Zwischenkreis 90 der Tiefbaumaschine 10 zugeführt werden.

Zu der Batterieeinheit 60 kann vorzugsweise ein DC/DC-Wandler 62 ausgebildet sein, wobei elektrische Energie bidirektional aus dem Zwischenkreis 90 über den DC/DC-Wandler 62 der Batterieeinheit 60 zum Laden beziehungsweise Entladen zuführbar ist. Zusätzlich kann eine Stromgleichrichtereinheit 66, insbesondere ein On-Board-Charger, ergänzend zu oder als Teil einer Zuführeinrichtung 64 vorgesehen sein, wobei elektrische Energie von der Zuführeinrichtung 64, insbesondere zum Laden der Batterieeinheit 60 oder zum Versorgen der Elektromotoren 50, dem Zwischenkreis 90 zuführbar ist. Die Zuführeinrichtung 64 kann insbesondere als Kabelanschluss ausgebildet sein.

Wie in Fig. 5 gezeigt, können zu dem Zwischenkreis 90 eine erste Steuereinrichtung 100 und zu dem Zwischenkreis 86 eine zweite Steuereinrichtung 80 vorgesehen sein, wobei die erste Steuereinrichtung 100 mit der zweiten Steuereinrichtung 80 in bidirektionaler Datenverbindung steht. Insbesondere kann hierbei die erste Steuereinrichtung 100 zum Versenden von Steuerbefehlen an die zweite Steuereinrichtung 80 ausgebildet sein, vorzugsweise zum Anpassen der mit der Brennstoffzelle 74 erzeugten und an den Zwischenkreis 90 zugeführten elektrischen Leistung. Ebenso kann die erste Steuereinrichtung 100 zum Steuern der Energieverteilung im Zwischenkreis 90 ausgebildet sein, etwa durch Anpassen der Ladeleistung der Batterieeinheit 60.

Die Tiefbaumaschine 10 kann eine Temperaturmanagementeinrichtung 40 umfassen und die Brennstoffzelleneinheit 70 kann ebenfalls eine Temperaturmanagementeinrichtung 88 umfassen. Die Temperaturmanagementeinrichtung 40 kann insbesondere zum Steuern des Wärmehaushalts der Tiefbaumaschine 10 etwa zum Heizen der Fahrzeugkabine und/oder zum Kühlen der Batterieeinheit 60 ausgebildet sein. Hierzu kann die Temperaturmanagementeinrichtung 40 der Tiefbaumaschine 10 insbesondere mit der Temperaturmanagementeinrichtung 88 der Brennstoffzelleneinheit 70 in Verbindung stehen, um die von der Brennstoffzelle 74 erzeugte Abwärme zu nutzen. Hierzu kann die Brennstoffzelleneinheit 70 insbesondere an den Kühl-/Heizkreislauf der Tiefbaumaschine 10 angeschlossen sein.

## Patentansprüche

1. Elektrisch betriebene Tiefbaumaschine (10) mit
- einem mobilen Trägergerät (12), welches einen fahrbaren Unterwagen (14) und einen Oberwagen (16) aufweist,
- einem Tiefbauwerkzeug (8),
- mehreren Elektromotoren (50) zum Betreiben von Komponenten der Tiefbaumaschine (10),
- mindestens einer aufladbaren Batterieeinheit (60), welche im Oberwagen (16) angeordnet ist und zum Speichern von elektrischer Energie und zum Versorgen der Elektromotoren (50) mit elektrischer Energie ausgebildet ist, und
- einer Brennstoffzelleneinheit (70), die mindestens eine Brennstoffzelle (74) und einen Wasserstoffvorrat (76) umfasst, wobei die Brennstoffzelleneinheit (70) zum bedarfsweisen Erzeugen von elektrischer Energie ausgebildet ist, welche über einen Pufferbatteriespeicher (61) abgebbar ist,
**dadurch gekennzeichnet,**
- **dass** die Brennstoffzelleneinheit (70) getrennt zu dem Pufferbatteriespeicher (61) ausgebildet und angeordnet ist,
- **dass** die Brennstoffzelleneinheit (70) an einer Außenseite des Oberwagens (16) lösbar angebracht ist oder neben der Tiefbaumaschine angeordnet ist und
- **dass** der Pufferbatteriespeicher (61) für die Brennstoffzelle (74) in dem Oberwagen (16) angeordnet ist, vorzugsweise zusammen mit der Batterieeinheit (60) ausgebildet ist.

2. Elektrisch betriebene Tiefbaumaschine nach Anspruch 1,
**dadurch gekennzeichnet,**
**dass** ein Zwischenkreis (90) ausgebildet ist, durch welchen die Elektromotoren (50), die mindestens eine Batterieeinheit (60) und die Brennstoffzelleneinheit (70) miteinander zum Verteilen von elektrischer Energie leitungsverbunden sind.

3. Elektrisch betriebene Tiefbaumaschine nach Anspruch 2,
**dadurch gekennzeichnet,**
**dass** eine erste Steuereinrichtung (100) vorgesehen ist, die ausgebildet ist, die elektrische Energie im Zwischenkreis (90) abhängig vom Ladezustand der Batterieeinheit (60) zu verteilen und
**dass** zu der ersten Steuereinrichtung (100) eine zweite Steuereinrichtung (80) vorgesehen ist, die mit der ersten Steuereinrichtung (100) in Verbindung steht und ausgebildet ist, abhängig von Steuerbefehlen der ersten Steuereinrichtung (100) die von der Brennstoffzelleneinheit (70) erzeugte elektrische Leistung anzupassen.

4. Elektrisch betriebene Tiefbaumaschine nach Anspruch 2 oder 3,
**dadurch gekennzeichnet,**
**dass** mit dem Zwischenkreis (90) zusätzlich mindestens eine elektrische Verbrauchseinheit (92) verbunden ist.

5. Elektrisch betriebene Tiefbaumaschine nach einem der Ansprüche 2 bis 4,
**dadurch gekennzeichnet,**
**dass** an der elektrisch betriebenen Tiefbaumaschine (10) eine Zuführeinrichtung (64) ausgebildet ist, wobei die Zuführeinrichtung (64) zum lösbaren elektrischen Verbinden der Brennstoffzelleneinheit (70) mit dem Zwischenkreis (90) vorgesehen ist, so dass elektrische Energie von der Brennstoffzelleneinheit (70) dem Zwischenkreis (90) zuführbar ist.

6. Elektrisch betriebene Tiefbaumaschine nach einem der Ansprüche 2 bis 5,
**dadurch gekennzeichnet,**
**dass** zu der Brennstoffzelleneinheit (70) ein DC/DC-Wandler (84) zum Anschluss an den Zwischenkreis (90) vorgesehen ist.

7. Elektrisch betriebene Tiefbaumaschine nach einem der Ansprüche 2 bis 6,
**dadurch gekennzeichnet,**
**dass** der Zwischenkreis (90) zum Leiten und Verteilen von Gleichstrom ausgebildet ist.

8. Elektrisch betriebene Tiefbaumaschine nach einem der Ansprüche 1 bis 7,
**dadurch gekennzeichnet,**
**dass** zum Kühlen der Brennstoffzelleneinheit (70) eine Kühleinrichtung vorgesehen ist.

9. Elektrisch betriebene Tiefbaumaschine nach einem der Ansprüche 1 bis 8,
**dadurch gekennzeichnet,**
**dass** den Elektromotoren (50) jeweils eine Invertereinheit (52) zugeordnet ist, welche zur Umsetzung von Gleichstrom in Wechselstrom ausgebildet ist.

10. Elektrisch betriebene Tiefbaumaschine nach Anspruch 1 bis 9,
**dadurch gekennzeichnet,**
**dass** die Brennstoffzelleneinheit (70) als separates Brennstoffzellenmodul (72) ausgebildet ist und
**dass** an der Tiefbaumaschine (10) eine Halteeinrichtung und/oder eine Befestigungseinrichtung (82) vorgesehen ist, mit der die Brennstoffzelleneinheit (70) lösbar und wechselbar an der Tiefbaumaschine (10) befestigt ist.

11. Elektrisch betriebene Tiefbaumaschine nach einem der Ansprüche 1 bis 10,
**dadurch gekennzeichnet,**
**dass** die elektrisch betriebene Tiefbaumaschine (10) als ein Bohrgerät ausgebildet ist und
**dass** mindestens ein Elektromotor einen Kraftdrehkopf, eine Seilwinde und/oder eine Pumpe antreibt.

12. Elektrisch betriebene Tiefbaumaschine nach einem der Ansprüche 1 bis 11,
**dadurch gekennzeichnet,**
**dass** eine Zuführeinrichtung (64) an der Tiefbaumaschine (10) zum Zuführen von elektrischer Energie aus einer separaten Wechselstromquelle ausgebildet ist, wobei zu der Zuführeinrichtung (64) eine Stromgleichrichtereinheit (66) vorgesehen ist.

13. Verfahren zum Betreiben einer elektrischen Tiefbaumaschine,
**dadurch gekennzeichnet,**
**dass** eine Tiefbaumaschine (10) nach einem der Ansprüche 1 bis 12 verwendet wird.

14. Verfahren zum Betreiben einer elektrischen Tiefbaumaschine nach Anspruch 13,
**dadurch gekennzeichnet,**
**dass** an einer Baustelle mindestens zwei elektrisch betriebene Tiefbaumaschinen vorgesehen sind und
**dass** die Brennstoffzelleneinheit (70) abhängig vom Leistungs- und/oder Energiebedarf der Tiefbaumaschinen zwischen den Tiefbaumaschinen gewechselt wird.

15. Verfahren zum Betreiben einer elektrischen Tiefbaumaschine nach Anspruch 13 oder 14,
**dadurch gekennzeichnet,**
**dass** die Batterieeinheit (60) während des Betriebs der Tiefbaumaschine (10) und/oder während des Stillstands der Tiefbaumaschine (10) mit der Brennstoffzelleneinheit (70) geladen wird.
